# EUROPÄISCHE PATENTANMELDUNG

(11) **EP 3 993 215 A1**
(43) Veröffentlichungstag der Anmeldung: **04.05.2022**
(21) Anmeldenummer: 20204700.7
(22) Anmeldetag: 29.10.2020
(51) Int. Cl.: H02J 3/46, H02M 7/493, F03D 9/25

(54) **DYNAMISCHE FRT-BÄNDER FÜR WINDENERGIEANLAGEN**

(71) Anmelder: Wobben Properties GmbH, 26607 Aurich (DE)
(72) Erfinder: BROMBACH, Johannes, 13437 Berlin (DE); MACKENSEN, Ingo, 26607 Aurich (DE); BUSKER, Kai, 26629 Großefehn (DE); EMANUEL, Hanna, 28203 Bremen (DE)
(74) Vertreter: Eisenführ Speiser

(57) **Zusammenfassung**

Die vorliegende Erfindung betrifft ein Verfahren zum Steuern wenigstens zweier umrichterbasierter Einspeiser, umfassend die Schritte: Vorgeben einer ersten Statik für einen ersten umrichterbasierten Einspeiser, Vorgeben einer zweiten Statik für einen zweiten umrichterbasierten Einspeiser, wobei die zweite Statik von der ersten Statik verschieden ist, Steuern des ersten umrichterbasierten Einspeisers in Abhängigkeit der ersten Statik und des zweiten umrichterbasierten Einspeisers in Abhängigkeit der zweiten Statik.

## Beschreibung

Die vorliegende Erfindung betrifft ein Verfahren zum Steuern wenigstens zweier umrichterbasierter Einspeiser.

Umrichterbasierte Einspeiser, wie beispielsweise Windenergieanlagen, Windparks oder Photovoltaikanlagen, weisen üblicherweise eine sogenannte FRT-Eigenschaft (Fault Ride Through) auf.

Dies bedeutet insbesondere, dass die umrichterbasierten Einspeiser die Netzspannung des elektrischen Versorgungsnetzes während eines Netzfehlers im elektrischen Versorgungsnetz mittels eines zusätzlichen Blindstroms oder einer zusätzlichen Blindleistung stützen.

Mit der FRT-Eigenschaft versucht der umrichterbasierte Einspeiser also insbesondere mittels einer zusätzlichen bzw. erhöhten Blindstrom- bzw. Blindleistungseinspeisung in das elektrische Versorgungsnetz die Netzspannung des elektrischen Versorgungsnetzes zu stützen, also die Netzspannung des elektrischen Versorgungnetzes in einen Normbereich zu schieben, von bspw. 0,95 p.u. bis 1,05 p.u. der Netz-Nenn-Spannung.

Im Falle von üblichen Lastzuschaltungen innerhalb des elektrischen Versorgungsnetzes kann es nun dazu kommen, dass die Netzspannung des elektrischen Versorgungsnetzes kurzzeitig einen zulässigen Bereich der Netzspannung auf Grund eines Schaltereignisses, wie bspw. einer Lastzuschaltung oder einer topologischen Umschaltung, verlässt und die FRT-Eigenschaft des umrichterbasierten Einspeisers hieraufhin auslöst.

Die FRT-Eigenschaft des umrichterbasierten Einspeisers wird also ausgelöst, obwohl dies nicht nötig wäre. Dies ist insbesondere darauf zurückzuführen, dass ein Schaltereignis innerhalb des elektrischen Versorgungsnetzes kurzzeitig wie ein Netzfehler innerhalb des elektrischen Versorgungsnetzes aussehen kann.

Sind nun in einem entsprechenden Netzabschnitt des elektrischen Versorgungsnetzes zu viele solcher umrichterbasierten Einspeiser mit einer solchen FRT-Eigenschaft vorhanden, kann es durch ein gleichzeitiges und weiträumiges Auslösen der FRT-Eigenschaft dazu kommen, dass sich die Netzspannung durch die umrichterbasierten Einspeiser zwar gestützt wird, sich das elektrische Versorgungsnetz aber in einem Arbeitspunkt fängt, der außerhalb eines zulässigen Bereiches der Netzspannung liegt.

Es steht in solchen Fällen dann bspw. eine dauerhafte Unterspannung am umrichterbasierten Einspeisers an, welcher dazu führt, dass sich der umrichterbasierte Einspeiser vom entsprechenden Netzabschnitt, also dem elektrischen Versorgungsnetz, trennt.

Die FRT-Eigenschaft von umrichterbasierten Einspeisern kann also dazu führen, dass zwar eine Netzstützung stattfindet, sich die umrichterbasierten Einspeiser aber trotzdem ungewollt vom elektrischen Versorgungsnetz trennen, was wiederum zu Instabilitäten im elektrischen Versorgungsnetz führen kann, im schlimmsten Fall zu einem Blackout des elektrischen Versorgungsnetzes.

Aufgabe der vorliegenden Erfindung ist es daher, eines der obengenannten Probleme zu adressieren. Insbesondere soll eine Möglichkeit geschaffen werden, die Auswirkungen von fehlerhaftem FRT-Verhalten von Windenergieanlagen zu minimieren. Zumindest soll aber eine Alternative zu bisher Bekanntem bereitgestellt werden.

Erfindungsgemäß wird somit ein Verfahren zum Steuern von wenigstens zwei umrichterbasierten Einspeisern vorgeschlagen, umfassend die Schritte: Vorgeben einer ersten Statik für einen ersten umrichterbasierten Einspeiser, Vorgeben einer zweiten Statik für einen zweiten umrichterbasierten Einspeiser, wobei die zweite Statik von der ersten Statik verschieden ist, Steuern des ersten umrichterbasierten Einspeisers in Abhängigkeit der ersten Statik und Steuern des zweiten umrichterbasierten Einspeisers in Abhängigkeit der zweiten Statik.

Es wird also insbesondere vorgeschlagen, umrichterbasierte Einspeiser innerhalb eines elektrischen Versorgungsnetzes mittels unterschiedlicher Statiken zu betreiben, bevorzugt in einem Verbund.

Die erste Statik wird dabei insbesondere so eingestellt bzw. dafür verwendet, die Spannung in ein Totband der zweiten Statik zu heben.

Die zweite Statik wird dabei insbesondere so eingestellt bzw. dafür verwendet, einen Fehlerstrom bereitzustellen.Hierdurch wird insbesondere sichergestellt, dass die umrichterbasierten Einspeiser innerhalb des elektrischen Versorgungsnetzes nicht alle gleichartig auf einen Netzfehler oder ein Schaltereignis reagieren, der bspw. durch einen Spannungseinbruch innerhalb des elektrischen Versorgungnetzes erkannt wird. Hierdurch wird insbesondere auch verhindert, dass durch gleichzeitige bzw. gleichartige FRT-Eigenschaften der umrichterbasierten Einspeiser das elektrische Versorgungsnetz destabilisiert wird, bspw. durch Aufschwingen der Netzspannung oder Fangen in einem instabilen Arbeitspunkt.

Es wird also insbesondere vorgeschlagen, einer sequenziellen Trennung mehrerer umrichterbasierter Einspeiser und dem daraus resultierenden Spannungskollaps des elektrischen Versorgungsnetzes mit unterschiedlichen Statiken zu begegnen.

Unter umrichterbasierten Einspeisern werden hierin insbesondere alle jene Einspeiser, also Erzeuger, Speicher und Wandler verstanden, die dazu eingerichtet sind, mittels eines Umrichters elektrische Leistung mit dem elektrischen Versorgungsnetz auszutauschen. Hierunter fallen insbesondere Windenergieanlagen, Photovoltaikanlagen sowie elektrische Speicher und weitere Umrichter aufweisende Netzinstallationen, wie bspw. STATCOMS oder FACTS.

Sofern die umrichterbasierten Einspeiser unterschiedliche Statiken aufweisen, also Steuerungskennlinien bspw. in Abhängigkeit der Netzspannung, kommt es insbesondere bei einem Spannungseinbruch innerhalb des elektrischen Versorgungsnetz zu einem versetzten Einsetzen der FRT-Eigenschaft. Hierdurch reagieren nicht alle umrichterbasierten Einspeiser gleichartig, und insbesondere gleichzeitig, auf einen Netzfehler oder ein Schaltereignis im elektrischen Versorgungnetz, wie bspw. einem Spannungseinbruch, der durch eine Lastaufschaltung im elektrischen Versorgungsnetz hervorgerufen wurde.

Die unterschiedlichen Statiken überlagern sich zudem zu einer Summenstatik, also einem Gesamtverhalten der umrichterbasierten Einspeiser. Diesbezüglich wird insbesondere auch vorgeschlagen, die Statiken so aufeinander abzustimmen, dass die Summenstatik zu einem Verhalten der umrichterbasierten Einspeiser führt, die schonend für das elektrische Versorgungsnetz sind.

Die Statiken werden also insbesondere auch unter Berücksichtigung einer Summenstatik so gewählt, dass die umrichterbasierten Einspeiser schonend am elektrischen Versorgungsnetz betrieben werden.

Es wird also insbesondere vorgeschlagen, die erste und die zweite Statik derart aufeinander abzustimmen, dass sich eine dritte Statik einstellt, die bevorzugt einer Netzanforderung genügt.

Bevorzugt sind die ersten und/oder die zweite Statik als FRT-Band oder als Blindleistungs-Spannungs-Statik ausgebildet.

Vorzugsweise weist die erste Statik ein erstes Totband auf und die zweite Statik weist ein zweites Totband auf, wobei das erste Totband von dem zweiten Totband verschieden ist, insbesondere wobei das erste Totband kleiner ist als das zweite Totband.

Es wird also insbesondere vorgeschlagen, dass, bevorzugt jede, Statik ein Totband bzw. Totbandbereich aufweist, in dem der Einspeiser insbesondere seine Blindstrom- und/oder Blindleistungseinspeisung nicht verändert bzw. konstant hält.

Bevorzugt verläuft das Totband wenigstens von 0,95 p.u. bis 1,05 p.u. der Netz-Nenn-Spannung. Dies bedeutet insbesondere, dass die Windenergieanlage ihre Blindstrom-und/oder Blindleistungseinspeisung nicht auf Grund eines Vorfalles im elektrischen Versorgungnetzes ändert, wenn sich die Netzspannung im Normbereich befindet.

Gleichwohl kann der umrichterbasierte Einspeiser dazu eingerichtet sein, seine Blindstrom-und/oder Blindleistungseinspeisung innerhalb des Totbandes zu ändern, wenn eine andere Steuerung oder Regelung dies vorsieht.

Vorzugsweise verläuft die erste Statik wenigstens abschnittsweise steiler als die zweite Statik.

Die Statiken weisen also wenigstens zwei Abschnitte auf, von denen einer ein Totband ist.

Zudem weisen die Statiken bevorzugt neben dem Totband noch einen weiteren Abschnitt auf, der nicht konstant ist.

Dieser weitere Abschnitt weist einen Anstieg bzw. eine Steilheit auf, und kann insbesondere auch als Regelbereich bezeichnet werden.

Jede Statik weist also bevorzugt wenigstens einen Totbandbereich und einen Regelbereich auf.

Zudem wird vorgeschlagen, dass diese Regelbereiche der ersten und zweiten Statik unterschiedliche Steilheiten aufweisen.

Es wird also sowohl vorgeschlagen, dass die Regelbereiche zueinander versetzt sind als auch, dass die Regelbereiche unterschiedlich sensibel ausgebildet sind. Bspw. führt die erste Statik zu einer frühen und starken Reaktion des ersten umrichterbasierten Einspeisers auf einen Vorfall im elektrischen Versorgungsnetz und die zweite Statik führt zu einer späteren und schwächeren Reaktion des zweiten umrichterbasierten Einspeisers auf denselben Vorfall.

Vorzugsweise ist die erste Statik wenigstens abschnittweise konstant.

Es wird also insbesondere vorgeschlagen, dass die erste Statik einen noch weiteren Abschnitt aufweist, in dem die Statik konstant verläuft.

Die erste Statik weist also insbesondere einen Totbandbereich, einen Regelbereich und einen Nicht-Regelbereich auf.

In einer weiteren Ausführungsform schließen sich die Bereiche nahtlos an einander an, sowohl in positiver als auch in negativer Richtung, insbesondere Spannungsrichtung.

Vorzugsweise ist die erste Statik und außerdem oder alternativ die zweite Statik eine Blindstrom-Spannung-Statik.

Die Statiken werden also insbesondere dazu verwendet, den Blindstrom- bzw. die Blindleistung des elektrischen Einspeisers in Abhängigkeit der Netzspannung zu regeln.

Insbesondere wird die Statik dabei dafür verwendet, einen Blindstrom- bzw. einen Blindleistungsaustausch des umrichterbasierten Einspeisers mit dem elektrischen Versorgungsnetz vorzunehmen, wenn es zu einer Netzspannungsänderung im elektrischen Versorgungnetz kommt, insbesondere, wenn die Netzspannung einen Normbereich von 0,95 p.u. bis 1,05 p.u. der Netz-Nenn-Spannung verlässt.

Vorzugsweise sind die erste Statik und die zweite Statik so aufeinander abgestimmt, dass sie im Wesentlichen einer dritten Statik entsprechen, die insbesondere von einem Netzbetreiber vorgegeben werden kann und/oder dass die erste Statik die Spannung innerhalb des zweiten Totbandes hebt.

Es wird also insbesondere vorgeschlagen, die Statiken derart aufeinander abzustimmen, dass die Gesamtheit aller Statiken eine bestimmte Charakteristika aufweist, die insbesondere einen schonenden Betrieb der umrichterbasierten Einspeiser am elektrischen Versorgungsnetz ermöglicht.

In einerweiteren Ausführungsform wird die dritte Statik für einen bestimmten Netzabschnitt des elektrischen Versorgungsnetzes durch einen Netzbetreiber vorgegeben und die ersten und die zweite Statik werden derart gewählt, dass die erste und die zweite Statik in Summe die dritte Statik ergeben.

In einer weiteren Ausführungsform stellt der Netzbetreiber Anforderungen für die dritte Statik für einen bestimmten Netzabschnitt des elektrischen Versorgungsnetzes auf und die ersten und die zweite Statik werden derart gewählt, dass die erste und die zweite Statik in Summe die dritte Statik ergeben.

Vorzugsweise ist die erste Statik und außerdem oder alternativ die zweite Statik im Über-und im Unterspannungsbereich im Wesentlichen symmetrisch aufgebaut.

Es wird also insbesondere vorgeschlagen, dass die Statiken derart aufgebaut sind, dass die umrichterbasierten Einspeiser auf ein Verlassen der Netzspannung eines Normbereiches für die Netzspannung im Wesentlich entgegengesetzt gleichartig reagieren.

Vorzugsweise sind die wenigstens zwei umrichterbasierten Einspeiser jeweils als Windenergieanlage oder als Windpark ausgebildet.

Alternativ oder zusätzlich sind die wenigstens zwei umrichterbasierten Einspeiser Teil eines Windparks.

Alternativ oder zusätzlich bilden die wenigstens zwei umrichterbasierten Einspeiser einen Windpark aus.

Erfindungsgemäß wird ferner eine Windenergieanlage vorgeschlagen, umfassend wenigstens eine Steuereinheit und eine mit der Steuereinheit verbundene Einspeiseeinheit, welche einen Umrichter zum Einspeisen elektrischer Leistung aufweist, wobei die Steuereinheit dazu eingerichtet ist, eine erste und/oder zweite Statik zu speichern und in Abhängigkeit dieser Statik den Umrichter zu steuern.

Die Steuereinheit ist also insbesondere dazu eingerichtet, mittels einer, insbesondere vorstehend oder nachstehend beschriebenen, Statik zu arbeiten, welche bevorzugt einstellbar ist, insbesondere im laufenden Betrieb veränderbar ist, bspw. durch den Anlagen- und/oder Netzbetreiber.Vorzugsweise wird die erste und/oder die zweite Statik, wie vorstehend oder nachstehend beschrieben, vorgegeben.

Erfindungsgemäß wird ferner ein Windpark vorgeschlagen, wenigstens umfassend zwei, wie vorstehend oder nachstehend beschriebene Windenergieanlagen und/oder eine Windparksteuereinheit, die dazu eingerichtet sind, ein vorstehend oder nachstehend beschriebenes Verfahren auszuführen oder daran teilzunehmen.

Der Windpark umfasst somit zwei, über ein gemeinsames Windparknetz verbundene Windenergieanlagen.

Die Windenergieanlagen können dabei individuell oder im Verbund gesteuert werden.

In einer Ausführungsform weist der Windpark die vorstehend oder nachstehend beschriebene erste Statik auf und ein weiterer Windpark, bevorzugt im selben Netzabschnitt, die zweite Statik.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden.
- Fig. 1: zeigt eine schematische Ansicht einer Windenergieanlage gemäß einer Ausführungsform.
- Fig. 2: zeigt eine schematische Ansicht zweier FRT-Bänder zweier Windenergieanlagen.
- Fig. 3: zeigt eine schematische Ansicht des Effektes des vorgeschlagenen Verfahrens.

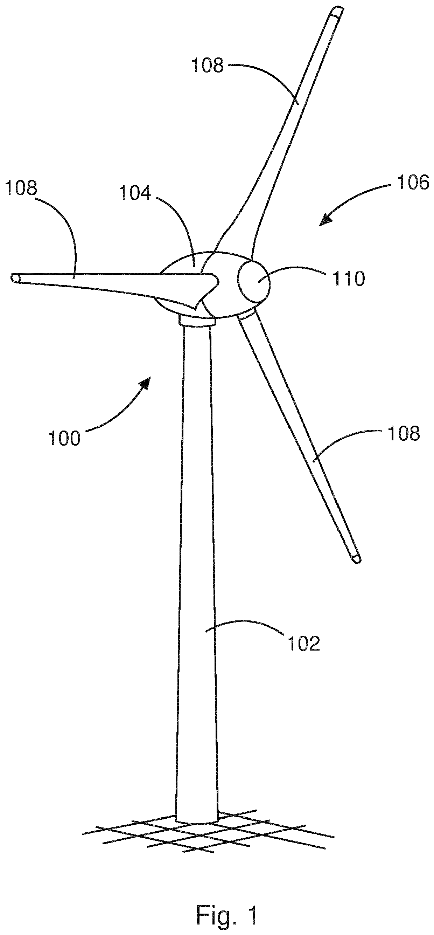

Fig. 1 zeigt eine schematische Ansicht einer Windenergieanlage 100 gemäß einer Ausführungsform.

Die Windenergieanlage 100 weist einen Turm 102 und eine Gondel 104 auf.

An der Gondel 104 ist ein aerodynamischer Rotor 106 mit drei Rotorblättern 108 und einem Spinner 110 angeordnet.

Der Rotor 106 wird im Betrieb durch den Wind in eine Drehbewegung versetzt und treibt dadurch einen Generator in der Gondel 104 an.

Der Generator ist ferner mit einem vorstehend oder nachstehend beschriebenen Umrichter verbunden.

Die Windenergieanlage ist also als umrichterbasierter Einspeiser ausgebildet.

Zum Betreiben der Windenergieanlage, und insbesondere des Umrichters, ist ferner eine vorstehend oder nachstehend beschriebene Steuereinheit vorgesehen, insbesondere um ein vorstehend oder nachstehend beschriebenes Verfahren auszuführen und/oder daran teilzunehmen.

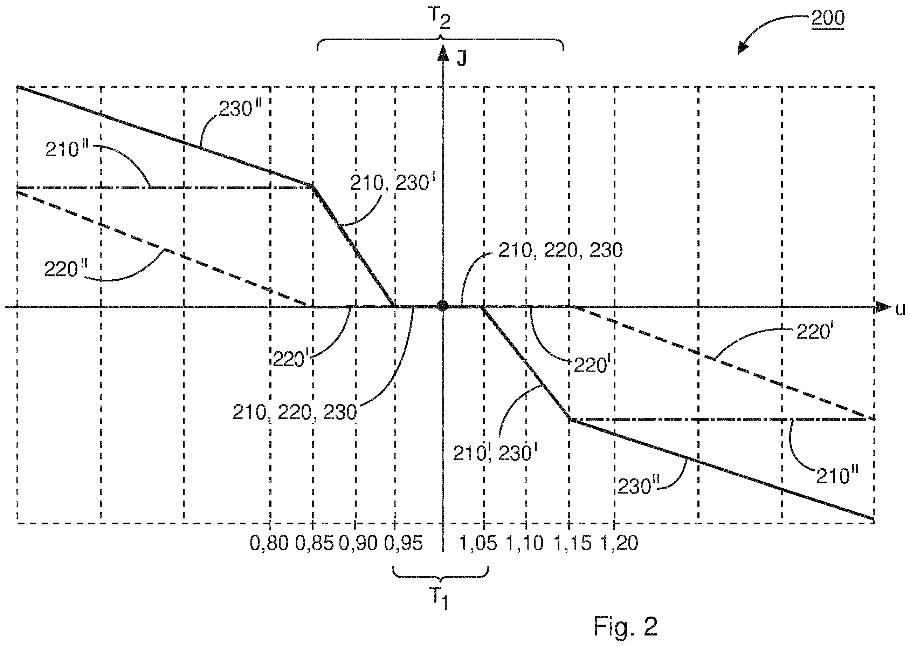

Fig. 2 zeigt eine schematische Ansicht 200 zweier Statiken, insbesondereFRT-Bänder, zweier Windenergieanlagen, die insbesondere an ein elektrisches Versorgungsnetz angeschlossen sind.

Die schematische Ansicht 200 zeigt dabei insbesondere ein Netzspannungs-Blindstrom-Diagramm, wobei auf der Abszisse die Ist-Spannung des elektrischen Versorgungsnetzes abgetragen ist und auf der Ordinate der von der Windenergieanlage eingespeiste Blindstrom.

Die erste Windenergieanlage weist eine erste Statik 210, 210', 210" mit einem ersten Totband T1 auf.

Die erste Statik 210, 210', 210" umfasst dabei insbesondere drei Abschnitte.

Der, insbesondere erste, Abschnitt 210 der ersten Statik 210, 210', 210" verläuft konstant zwischen 0,95 p.u. und 1,05 p.u. der Ist-Spannung des elektrischen Versorgungsnetzes und kann auch als Totband T1 bezeichnet werden.

Der, insbesondere zweite, Abschnitt 210' der ersten Statik 210, 210', 210" verläuft linear zwischen 0,95 p.u. und 0,85 p.u. bzw. 1,05 p.u. und 1,15 p.u. und weist einen ersten Anstieg ungleich 0 auf.

Der, insbesondere dritte, Abschnitt 210" der ersten Statik 210, 210', 210" verläuft konstant zwischen 0,85 p.u. und 0 bzw. 1,15 p.u. und Unendlich und weist einen zweiten Anstieg gleich 0 auf. Der, insbesondere zweite Abschnitt 210", verläuft also im Wesentlichen konstant.

Die zweite Windenergieanlage weist eine zweite Statik 220, 220' mit einem zweiten Totband T2 auf.

Die zweite Statik 220, 220'umfasst dabei insbesondere zwei Abschnitte.

Der, insbesondere erste, Abschnitt 220 der zweiten Statik 220, 220' verläuft konstant zwischen 0,85 p.u. und 1,15 p.u. der Ist-Spannung des elektrischen Versorgungsnetzes und kann auch als Totband T2 der zweiten Statik 220, 220' bezeichnet werden.

Der, insbesondere zweite, Abschnitt 220' der zweiten Statik 220, 220' verläuft zwischen 0,85 p.u. und 0 bzw. zwischen 1,15 p.u. und Unendlich.

Das erste Totband T1 ist also von dem zweiten Totband T2 verschieden, insbesondere ist das erste Totband T1 kleiner als das zweite Totband T2.

Die erste Statik 210, 210', 210" und die zweite Statik 220, 220' sind ferner so aufeinander abgestimmt, dass sie im Wesentlichen einer dritten Statik 230, 230', 230" entsprechen, die bspw. dem Wunsch eines Netzbetreibers entspricht.

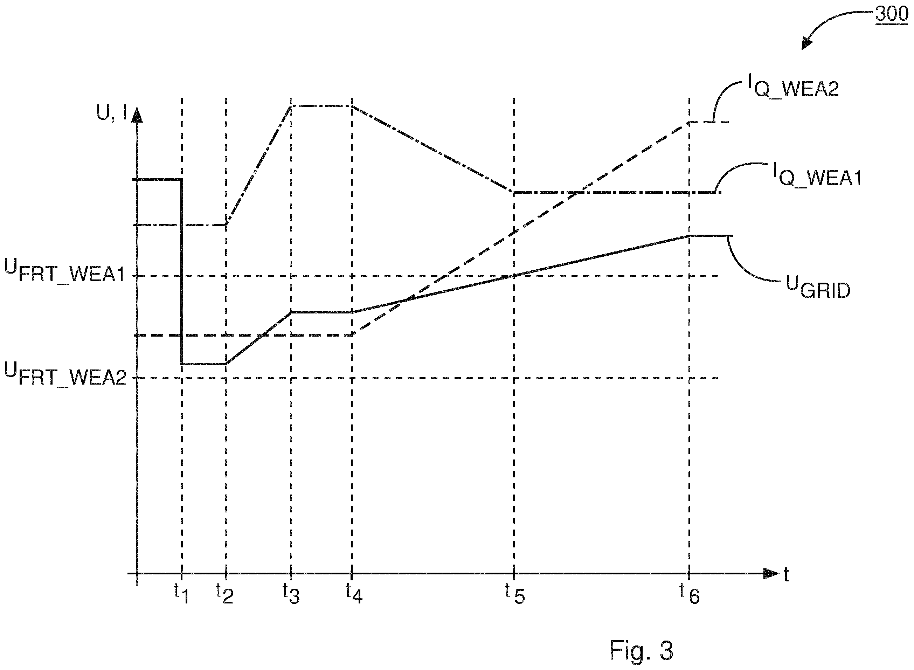

Fig. 3 zeigt eine schematische Ansicht des Effektes des vorgeschlagenen Verfahrens.

Auf der Ordinate sind die Ist-Spannung des elektrischen Versorgungsnetzes U_grid und die Blindströme der Windenergieanlagen Iq_wea1, Iq_wea2 abgebildet.

Auf der Abszisse ist der zeitliche Verlauf t abgebildet.

Die Ist-Spannung des elektrischen Versorgungsnetzes Ugrid verläuft bis zum Zeitpunkt t1, bspw. 0ms, auf Sollniveau, also wie vom Netzbetreiber gewünscht.

Zum Zeitpunkt t1, bspw. 0ms, bricht die Ist-Spannung des elektrischen Versorgungsnetzes Ugrid ein, bspw. durch Lastschaltungen innerhalb des elektrischen Versorgungnetzes.

Hierbei wird eine erste Grenzspannung Ufrt_wea1 der ersten Windenergieanlage unterschritten, wodurch die FRT-Eigenschaft der ersten Windenergieanlage mittels der ersten Statik, wie in Fig. 2 gezeigt, ausgelöst.

Zum Zeitpunkt t2, bspw. 30ms, speist die erste Windenergieanlage hierdurch einen erhöhten Blindstrom ein, der das elektrische Versorgungsnetz stützt und insbesondere zu einer Erholung der Ist-Spannung des elektrischen Versorgungsnetzes führt.

Hierdurch stützt die erste Windenergieanlage erfolgreich das elektrische Versorgungsnetz. Gleichwohl befindet sich die erste Windenergieanlage noch im FRT-Modus, weil das elektrische Versorgungsnetz immer noch eine Unterspannung aufweist. Ohne eine weitere zusätzliche Stützung, bspw. durch die zweite Windenergieanlage, würde sich die erste Windenergieanlage nach Ablauf einer Fehlerzeit vom elektrischen Versorgungsnetz trennen.

Zum Zeitpunkt t4, bspw. 1000 ms, speist die zweite Windenergieanlage ebenfalls einen erhöhten Blindstrom ein, der das elektrische Versorgungsnetz ebenfalls stützt und zu einer weiteren Erholung der Ist-Spannung des elektrischen Versorgungsnetzes führt.

Dies ist z.B. auf eine übergeordnete Spannungsregelung des Windparks, bspw. einer Q(U)-Regelung), zurückzuführen, da der zweite Teil der Windenergieanlagen nicht im Fehlermodus arbeitet und somit über die Parkregelung kontinuierlich die Spannung stützen kann.

Zum Zeitpunkt t6, bspw. 4000ms, tritt die Ist-Spannung des elektrischen Versorgungsnetzes dann wieder in den Sollbereich ein.

Dass die beiden Windenergieanlagen unterschiedlich auf denselben Spannungseinbruch reagieren, ist auf die zuvor beschriebenen Statiken und die Reaktion der übergeordneten Regelung zurückzuführen.

### Bezuqszeichenliste

- 100: Windenergieanlage
- 102: Turm, insbesondere einer Windenergieanlage
- 104: Gondel, insbesondere einer Windenergieanlage
- 106: aerodynamischer Rotor, insbesondere einer Windenergieanlage
- 108: Rotorblatt, insbesondere einer Windenergieanlage
- 110: Spinner, insbesondere einer Windenergieanlage
- 210: erster Abschnitt der ersten Statik
- 210': zweiter Abschnitt der ersten Statik
- 210": dritter Abschnitt der ersten Statik
- 220: ersten Abschnitt der zweiten Statik
- 220': zweiter Abschnitt der zweiten Statik
- 230: erster Abschnitt der dritten Statik, insbesondere der Gesamtstatik
- 230': zweiter Abschnitt der dritten Statik, insbesondere der Gesamtstatik
- 230": dritter Abschnitt der dritten Statik, insbesondere der Gesamtstatik

- T1: Totband der ersten Statik
- T2: Totband der zweiten Statik
- Ugrid: Ist-Spannung, insbesondere des elektrischen Versorgungsnetzes
- Ufrt_wea1: Grenzspannung, insbesondere der ersten Windenergieanlage
- Ufrt_wea2: Grenzspannung, insbesondere der zweiten Windenergieanlage
- Iq_wea1: Blindstrom der ersten Windenergieanlage
- Iq_wea2: Blindstrom der zweiten Windenergieanlage
- t: Zeit

## Patentansprüche

1. Verfahren zum Steuern wenigstens zweier umrichterbasierter Einspeiser, umfassend die Schritte:
- Vorgeben einer ersten Statik (210, 210', 210") für einen ersten umrichterbasierten Einspeiser,
- Vorgeben einer zweiten Statik (220, 220') für einen zweiten umrichterbasierten Einspeiser, wobei die zweite Statik von der ersten Statik verschieden ist,
- Steuern des ersten umrichterbasierten Einspeisers in Abhängigkeit der ersten Statik (210, 210', 210") und des zweiten umrichterbasierten Einspeisers in Abhängigkeit der zweiten Statik (220, 220').

2. Verfahren zum Steuern nach Anspruch 1, wobei
- die erste Statik (210) ein erstes Totband (T1) aufweist und
- die zweite Statik (220) ein zweites Totband (T2) aufweist, wobei
- das erste Totband (T1) von dem zweiten Totband (T2) verschieden ist, insbesondere wobei das erste Totband (T1) kleiner ist als das zweite Totband (T2).

3. Verfahren zum Steuern nach Anspruch 1 oder 2, wobei
- die erste Statik (210') wenigstens abschnittsweise steiler verläuft als die zweite Statik (220').

4. Verfahren zum Steuern nach einem der vorstehenden Ansprüche, wobei
- die erste Statik (210") wenigstens abschnittweise konstant ist.

5. Verfahren zum Steuern nach einem der vorstehenden Ansprüche, wobei
- die erste Statik (210, 210', 210") und außerdem oder alternativ die zweite Statik (220. 220') eine Blindstrom-Spannung-Statik ist.

6. Verfahren zum Steuern nach einem der vorstehenden Ansprüche, wobei
- die erste Statik (210, 210', 210") und die zweite Statik (220, 220') so aufeinander abgestimmt sind, dass sie im Wesentlichen einer dritten Statik (230, 230', 230") entsprechen, die insbesondere von einem Netzbetreiber vorgegeben werden kann und/oder dass die erste Statik (210, 210', 210") die Spannung innerhalb des zweiten Totbandes (T2) hebt.

7. Verfahren zum Steuern nach einem der vorstehenden Ansprüche, wobei
- die erste Statik (210, 210', 210") und außerdem oder alternativ die zweite Statik (220, 220') im Über- und im Unterspannungsbereich im Wesentlichen symmetrisch aufgebaut ist.

8. Verfahren zum Steuern nach einem der vorstehenden Ansprüche, wobei
- die wenigstens zwei umrichterbasierten Einspeiser jeweils als Windenergieanlage oder als Windpark ausgebildet sind.

9. Verfahren zum Steuern nach einem der vorstehenden Ansprüche, wobei
- die wenigstens zwei umrichterbasierten Einspeiser Teil eines Windparks sind.

10. Verfahren zum Steuern nach einem der vorstehenden Ansprüche, wobei
- die wenigstens zwei umrichterbasierten Einspeier einen Windpark ausbilden.

11. Windenergieanlage umfassend wenigstens eine Steuereinheit und eine mit der Steuereinheit verbundene Einspeiseeinheit, welche einen Umrichter zum Einspeisen elektrischer Leistung aufweist, wobei
- die Steuereinheit dazu eingerichtet ist, eine erste und/oder zweite Statik zu speichern und in Abhängigkeit dieser Statik den Umrichter zu steuern.

12. Windenergieanlage (100) nach Anspruch 11, wobei
- die erste (210, 210', 210") und/oder zweite Statik (220, 220') nach einem Verfahren der Ansprüche 1 bis 10 vorgegeben werden.

13. Windpark umfassend wenigstens zwei Windenergieanlagen (100) nach einem der Ansprüche 11 oder 12 und/oder eine Windparksteuereinheit, die dazu eingerichtet ist, ein Verfahren nach einem der Ansprüche 1 bis 10 auszuführen.
